(19) Europäisches Patentamt

European Patent Office

Office européen des brevets

(11) **EP 1 059 578 A2**

(12) **EUROPEAN PATENT APPLICATION**

(43) Date of publication:
**13.12.2000  Bulletin 2000/50**

(51) Int. Cl.$^7$: **G06F 1/00**

(21) Application number: **00304363.5**

(22) Date of filing: **23.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority:  **07.06.1999 US 326977**

(71) Applicant:
**Hewlett-Packard Company
Palo Alto, California 94304-1112 (US)**

(72) Inventors:
• **Puckette, Robert B.E.
Corvallis, OR 97330 (US)**
• **Stephens, Bruce A.
Corvallis. OR 97330 (US)**

(74) Representative:
**Colgan, Stephen James et al
CARPMAELS & RANSFORD
43 Bloomsbury Square
London WC1A 2RA (GB)**

(54)    **Secure backdoor access for a computer**

(57)    A computer (14) having a password function (116) used to prevent unauthorized access to the computer (14) which can be unlocked by a backdoor function (114). The computer (14) includes a random number generating function (112) which creates a random number. The random number has a secret function (100) performed on it by an agent (24) external to the computer( 14). The secret function (100) performed on the random number is verified by the backdoor function (114) to allow unlocking of the password function (116).

Fig. 3A

**EP 1 059 578 A2**

## Description

### FIELD OF THE INVENTION

The invention relates to password security of a computer, more specifically, it relates to a backdoor access function which allows access to the computer when the password is not known.

### BACKGROUND OF THE INVENTION

Today's computers have the capability to store large amounts of data and the ability to operate several different programs which can enter, modify, process, and output the stored data. As computers have become more useful, corporations, government agencies, and some individuals have come to regard them as essential to their respective goals and purposes. Therefore the data and programs stored on the computers represent tremendous intellectual property which if allowed to be examined by other parties may result in significant economic loss. The owners and users of computers, therefore, have a significant interest in providing strong security in allowing who can have access to the computer. Several different methods of restricting access to the computer have been developed. These password access methods include alpha-numeric passwords, fingerprint analysis, voice analysis, and physical or electrical keys, to name a few. Sometimes, however, the authorized user is unable to access the computer because the password is forgotten, a fingerprint is damaged, the common cold interferes with voice analysis, or a key is lost. Therefore, often times a "backdoor" is provided by the access methods to allow an alternate entrance to the computer.

When creating a "backdoor" access to a password function the need to provide strong security must be balanced with the usability for the user of the backdoor access. If the usability is given too much weight in the balance, often times the backdoor access security is lessened. If the security is given too much weight in the balance, the user is unable to effectively use the backdoor access. Striking the proper balance requires that both security and usability be optimized and this has not been successfully achieved.

One problem with providing the backdoor access is that the security of the computer is compromised if the backdoor access function has less security features than the original access method. For this reason, backdoor access functions are generally kept very secret. However, if the secret is discovered by an attacker, it can be quickly communicated across the world possibly subjecting all computers using the backdoor access function to become compromised. Notably, most computers are now outsourced to be built in several locations around the world. If the secret to the backdoor access is made available to the different manufacturers, due to the need to build the secret into the computer, then the ability to keep the computer secure is diminished. Buyers of the computers are insisting that the products they purchase not be compromised by unknown parties. Thus a need exists to have a computer system with backdoor access to a password function that will not be compromised by any party that comes in contact with the product before it reaches the intended buyer.

### SUMMARY

A computer has a password function used to prevent unauthorized access to the computer which can be unlocked by a backdoor function. The computer includes a random number generating function which creates a random number. The random number has a secret function performed on it by an agent external to the computer. The secret function performed on the random number is verified by the backdoor function to allow unlocking of the password function.

Another aspect of the invention includes a timeout function within the computer which provides a fixed time interval only during which the backdoor function is capable of unlocking the password function.

### BRIEF DESCRIPTION OF THE DRAWINGS

Fig. 1 is an illustration of a conventional simple backdoor access scheme that can be compromised by an attacker.

Fig. 2 is an illustration of a conventional public key - private key backdoor access scheme.

Fig. 3A is an illustration of an embodiment of the invention which provides secure backdoor access to a computer.

Fig. 3B is an illustration of the embodiment of Fig. 3A showing an exemplary physical implementation using hardware and software or both.

Fig. 4 is an illustration of a first alternative embodiment which incorporates a special code into the secure backdoor access of Fig. 3.

Fig. 5 is an illustration of a second alternative embodiment which incorporates a hint into the secure backdoor access of Fig. 3.

### DETAILED DESCRIPTION OF THE PREFERRED AND ALTERNATE EMBODIMENTS

When computer manufacturers design and specify computer systems it is often done with the help of a manufacturing partner. In order to facilitate fast design cycles, the full schematics and source code of the computer should be made available to the partner. Often times this partner is in another country and is subject to different laws and customs. In addition, the partner may also be working with other competitive computer manufacturers and thus may purposely or inadvertently disclose confidential information such as the operation of the backdoor access to a computer's password function. Ideally, the backdoor access scheme should not be susceptible to an attacker of the computer even if the attacker has complete access to the full schematics and source code of the computer. In developing such a scheme, the practical aspects of computer design should be considered. The scheme should not add significantly to the product cost nor be so complex that it is difficult to load and execute it at the appropriate time in the boot process.. Since the password scheme is performed before the computer is allowed to fully function, the backdoor access scheme should occupy a small code size. Additionally, the backdoor access will likely only be needed when the authorized user of the computer forgets the original password, is killed, disabled, replaced with another individual, or the manufacturer or other authorized entity (head of corporation, police, government agency) needs to service the unit or access the unit and the password is not available. Therefore, the user interface can be minimal.

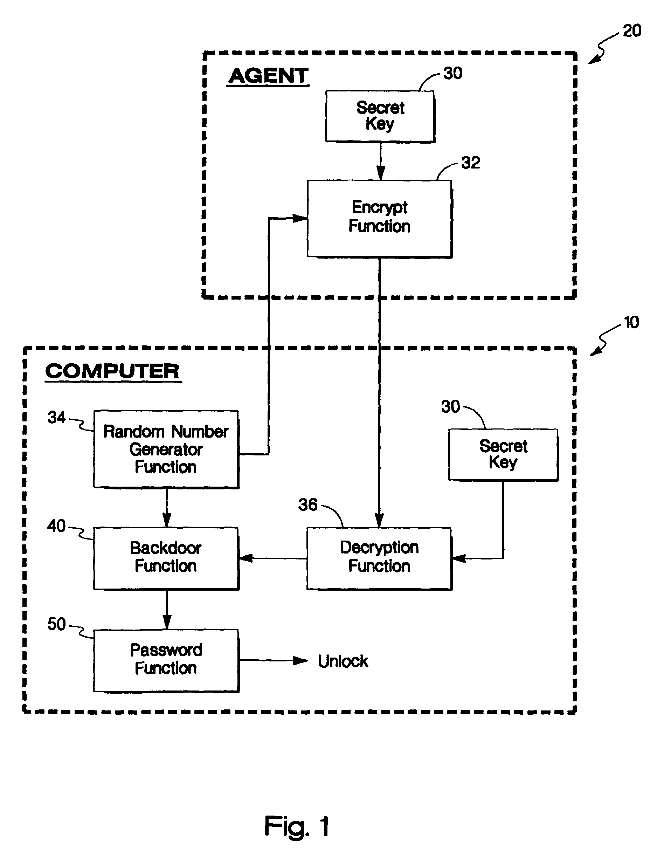

Fig. 1 is an exemplary illustration of a computer 10 and an agent 20 which illustrates a problem with conventional backdoor access schemes. Agent 20 is external to the computer and is either a separate electronic device or a remote computer system, possibly accessed by a person, used to provide authentication of a user of the computer 10. In providing a backdoor function 40, the computer 10, in response to a user's request, first generates a random number through a random number generator function 34. Several different random number generators are known to those skilled in the art such as pseudo random code generators, free-running clocks, and one time pads, to name a few. This random number is then communicated to the agent 20, either by electronic or audible means. The agent 20 then uses a secret key 30 to encrypt the random number using an encrypt function 32. Several methods of encrypting data exist and are known to those skilled in the art. The resultant encrypted random number is then communicated back to the computer 10 which decrypts the encrypted random number in the decryption function 36 using a copy of the secret key 30 before passing the decrypted random number to the backdoor function 40. The backdoor function 40 then compares the decrypted random number with the original random number sent to the agent 20. If the two random numbers are the same then the password function 50 is instructed to unlock the computer 10. In this approach of Fig. 1, the computer 10 contains not only the secret key 30 but also the method of decryption which likely will be used by an attacker to reveal the encryption function 32 of the agent 20. Thus, the agent 20 could be substituted by an attacker just from the attacker having access to the design and source code of the computer 10.

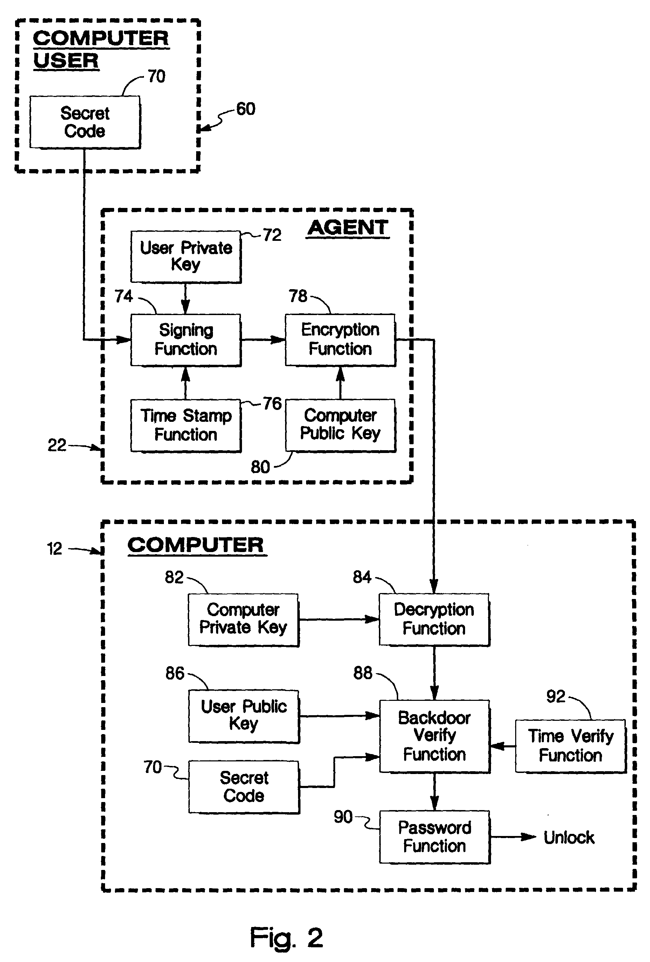

Fig. 2 illustrates an alternative method of providing a backdoor access to a computer 12 and an agent 22 using conventional public key-private key cryptography. Public key-private key cryptography is well known to those skilled in the art. In this situation, a user 60 of computer 10 provides a special backdoor secret code that is known to the computer user 60 in addition to his password. This secret code 70 is chosen by the user so that he is unlikely to forget it, such as a birthdate, social security number, mother's maiden name, or even a corporate administration password, to name a few. The secret code 70 is then also stored by the user on the computer 12. The user private key 72 and computer public key 80 are previously stored on the agent 22. The computer private key 82 and user public key 86 we previously stored on computer 12. The secret code 70 is communicated to the agent 22 by computer user 60 when the backdoor access is required. The agent 22 is once again external to the computer 12. Within the agent 22, the secret code 70 is signed using a previously stored user private key 72 in a signing function 74. The signing function 74 is typically just an appending and formatting function. Optionally, to further provide security so the signed secret code cannot be used again, the signing function 74 allows for time stamping the signed secret code using a time stamp function 76. The signed secret code is then encrypted using encryption function 78 using the computer's public key 80 which has previously been stored on agent 22. The encrypted signed secret code is then communicated to the computer 12. The computer 12 then uses the computer's private key 82 with a decryption function 84 to decrypt the encrypted signed secret code. The signed secret code is then passed to a backdoor verify function 88. The backdoor verify function 88 then uses the user's public key 86, and optionally the time verify function 92 if time stamping is used, to unsign the secret code. The unsigned secret code is then compared in the backdoor verify function 88 with the secret code 70 that is stored on computer 12. If it is verified as the same, then the password function 90 is unlocked allowing access to computer 12.

One problem with this public-private key approach of Fig. 2 is the need to supply both the computer and all its users with public and private keys to provide for the signing. Secondly, the encryption/decryption functions add both code complexity and code length to the source code of the computer 12.

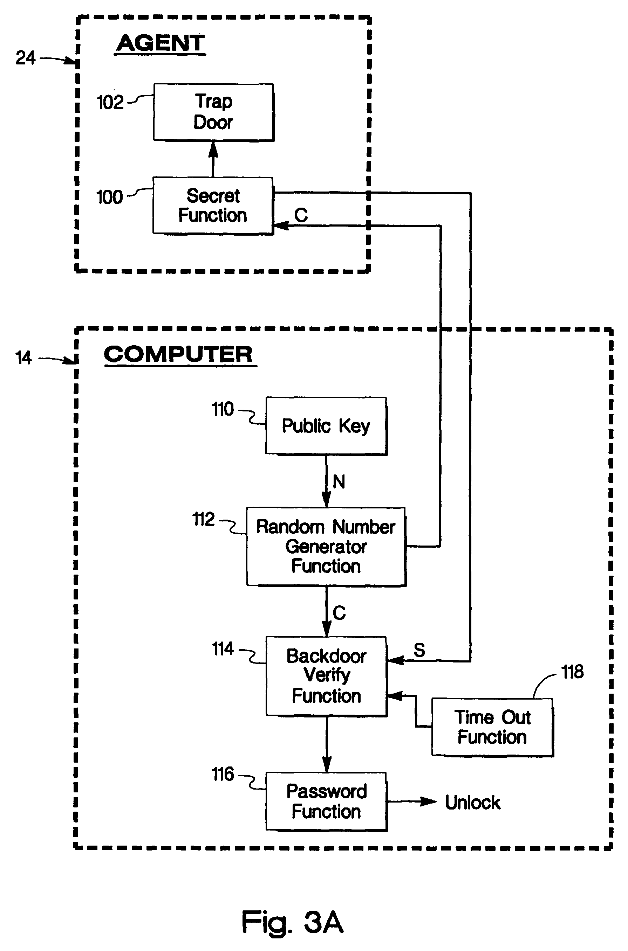

Fig. 3A is an exemplary illustration of the invention showing the interaction between a computer 14 and an agent 24. Computer 14 has stored on it a public key (N) 110 which in conjunction with a random number generator function 112 is used to provide a limit on a random number to a secret function 100 in the agent 24. The secret function 100 manipulates the content of the random number using a predetermined mathematical formula that is the secret function. One characteristic for the secret function 100 is that it be one of the type known to those skilled in the art as a one-way function with a trap door 102. Several one-way functions with trap doors exist and are known to those skilled in the art (see U.S. Patent No. 5,222,140). A one-way function means that it is more difficult to compute the secret function 100 than it is to perform its inverse function. However, if given the trapdoor 102, the computation of the secret function 100 is easy and an output is generated. The output of the secret function 100 is then communicated to the backdoor verify function 114 on the computer 14 which performs the inverse function of the secret function 100 on the received output from agent 24. The backdoor verify function 114 then compares the inverse function result with an expected result passed from the random number generator 112. Optionally, in order to further provide additional security against potential attackers, a time out function 118 can be used to restrict the time period in which a response from the agent 24 is allowed to be examined by the backdoor verify function 114. If the backdoor verify function 114 verifies that the output of agent 24 matches the expected result from random number generator 112, then the password function 116 is unlocked, otherwise, the backdoor access is aborted.

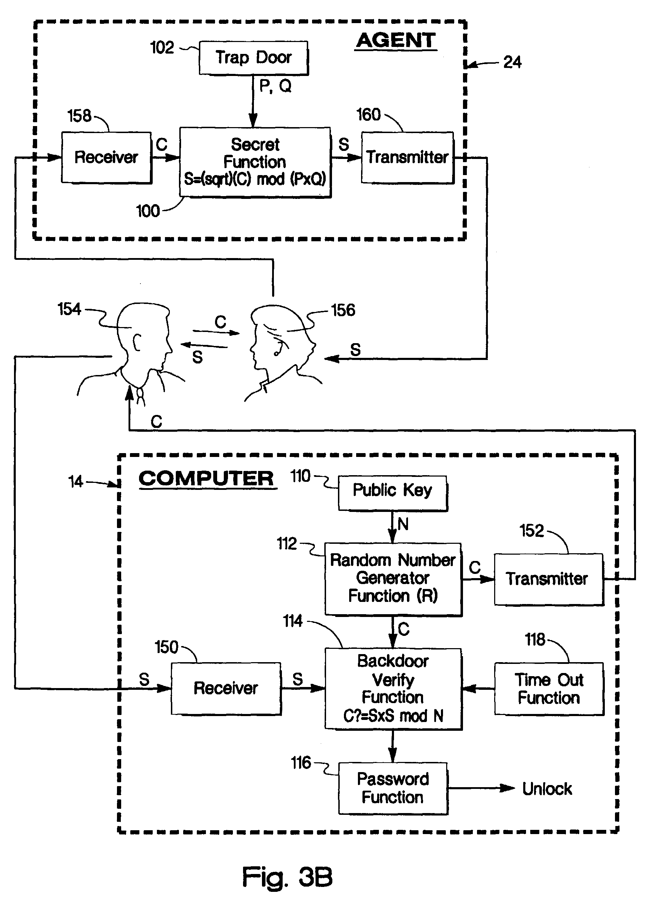

The exemplary implementation of Fig. 3A is further illustrated in Fig. 3B as having a computer user 154 conversing with a computer manufacturer support person 156. The conversation occurs over a phone line or alternatively, the conversation could be held over a data channel such as the internet or a direct communication channel. Agent 24 has a receiver circuit 158, such as a keyboard used by the support person 156, for receiving the output of the random number generator function 112 that is sent using a transmitter 152 to the computer user 154 an then onto the support person 156 who inputs this output into the agent 24. The computer user 154 receives the output of the random number generator function 112 using preferably a display device on the computer 14 as transmitter 152, such as an video display terminal or liquid crystal display to name a couple. The agent 24 passes the received random number to the secret function 100. After performing the secret function 100, the agent 24 uses a transmit circuit 160, preferably a display device, to output the result of the secret function 100 to the support person 156 who further transmits the result of the secret function 100 to the computer user 154. The computer user 154 then transmits the result of the secret function 100 to a receiver input device 150, such as a keyboard, on the computer 14. If the computer user 154 has access to agent 24 then the manufacturing support person 156 is not required. In addition, it is also envisioned that transmitter 152 and receiver 158 are electrically coupled, as well as transmitter 160 being electrically coupled to receiver 150. This electrical coupling is either a direct cable connection, a wireless connection, or an internet connection.

The aforementioned functions of Fig. 3B are performed by either a suitably programmed microprocessor or specially designed hardware in the respective agent 24 or computer 14. Other possible implementations are possible in allocating the various functions to software or hardware and still meet the spirit and scope of the invention. The public key 110 is stored in any suitable computer readable memory, such as a electrically erasable programmable read-only memory (EEPROM), dynamic random access memory (DRAM), or hard-disk drive, to name a few, on computer 14. The random number generator function 112 and timeout function 118 are preferably implemented using a suitably programmed microprocessor, such as a Pentium processor made by Intel or a system controller such as a Hitachi H8 processor, to name a couple. In addition, the random number generator function 112 may interface to an on board timer used in the timeout function 118 in order to get a seed for the random number generator function 112, or alternately, a specially designed system controller could implement the random number generator function 112 and timeout function 118 using conventional logic circuits. Thus, the random number generator function 112 and timeout function 118 are capable of being implemented in a conventional IBM compatible PC or other computer using hardware, or hardware and software combined. The backdoor verify function 114 and password function 116 are implemented by a set of software routines stored in computer readable memory encoded with executable instructions that cause a microprocessor, such as the Pentium processor, to function as described. Preferably for a conventional IBM compatible PC, the computer readable memory is the Basic Input/Output System (BIOS) code stored in a programmable read-only memory that is executed during the power on self-test (POST) code that the processor runs during initialization.

The agent 24 in Fig. 3B is preferably a programmed computer or other electronic device having a computer processor with the trap door 102 secret stored in computer readable memory and the secret function 100 implemented as a software program in computer readable memory that is encoded with executable instructions to cause a computer processor to perform the secret function. Alternatively, the secret function may be implemented by using conventional logic circuits or a combination of conventional logic circuits and software programs in computer readable memory executing instructions to interface with the conventional logic circuits.

One exemplary example of an embodiment of Fig. 3B uses for the secret function 100 a one-way function with a trapdoor which finds the square root modulo N of a random number modulo $N$, where $N$ is a number formed by the product of two large prime numbers, for instance $P$ and $Q$. This one way function for quadratic residousity is considered to be an intractable problem. In other words, given a random number $C$ between $0$ and $N-1$, there are no known efficient algorithms to compute $S$ such that $S \times S$ modulo $N$ is equal to $C$. In the case where $N = P \times Q$, where $P$ and $Q$ are prime, there are exactly four square roots modulo N for any numbers between 0 and N-1 that have any square roots modulo N. Note also that factoring is also considered to be a intractable problem. The RSA public key algorithm is considered secure due to this fact. Factoring means that for a sufficiently large P and Q, it is difficult to compute P and Q only given their product N.

In this exemplary embodiment, the secret function 100 is chosen to find a square root modulo N of a random number between 1 and public key 110, a Blum integer N, formed by the product of two large random numbers P and Q, where P and Q are chosen to both be congruent to 3 modulo 4. The trapdoor 102 secret to the secret function 100 is P and Q and these numbers are only known to the agent 24 and are not the known to the computer 14. However, the public key 110 is stored on computer 14. The random number generator function 112 creates a first random number R between 1 and N-1. The random number generator function 112 then creates a second random number C by squaring of the number R modulo N ($C=R^2$ mod $N$). The number C is then the random number communicated to the secret function 100 of agent 24. The secret function 100 then computes one of the square root modulo N ($S$) of the random number C and communicates the number S to the backdoor verify function 114, which also receives the random number C from the random number generating function 112. The back door verify function 114 then performs the inverse of the secret function which is the square of S modulo N ($S^2$ mod $N$) and verifies that the result is equal to C. If the result is verified, the password function 116 is then allowed to unlock. Note that the backdoor verify function 114 only requires the multiplication of two integer numbers and integer modulo arithmetic which is not very complex.

To find a square root modulo N in secret function 100 in agent 24, one exemplary method is to perform the following steps. First, a number U is found where $U=C((P+1)/4)$ mod $P$. This number U is the square root modulo N of C mod P. Second, a number V is found where $V=C((Q+1)/4)$ mod P . This number V is the square root modulo N of C mod Q. Third, using the Extended Euclidean Algorithm, known to those skilled in the art (see Schneier, Bruce, <u>Applied Cryptography, Protocols, Algorithms, and Source Code in C</u>, pp. 202-203, John Wiley and Sons, 1993, ISBN 0-471-59756-2) the integers A and B are found such that $A \times P + B \times Q = 1$. Once A and B are found then lastly, S is created by the following function:

$$S = (U \times B \times Q + V \times A \times P) \bmod N.$$

S is then a square root modulo N of C mod N.

As can be seen, calculating the square root modulo N is not difficult if the secret keys P and Q are known. However, since P and Q are not available to the computer, an attacker must factor the public key 110, a Blum Integer N, which is also an intractable problem. Another option to the attacker is to use some brute force algorithm to guess a square root modulo N. To limit the attackers ability to foil the backdoor scheme with these alternate solutions, an optional timeout function 118 provides a limited time window in which to receive a response from agent 24. For audible communications with a human user of the computer14 to the agent 24, an exemplary time period would be 10 seconds. Thus an agent 24 that knows the trapdoor 102, P and Q, can compute the proper response within fractions of a second and additional time is allowed for the agent 24 to communicate and have the user enter the response into the computer 14. If a timely and correct response S is received, the computer 24 can conclude that the user knows the secret function and the secret trapdoor 102, P and Q. This is in spite of the fact that the computer 24 doesn't contain either the secret function 100 or the secret trapdoor 102, P and Q.

The scheme of Fig. 3A provides excellent security if agent 24 is a separate electronic device which can be safely distributed and secured from attackers. In fact, one aspect of the invention envisions the backdoor password function described being the only method of unlocking the password function. That is the password function is only be unlocked by the aforementioned process. However, when agent 24 is a remote computer at say a manufacturer's service center, then the user of computer 14 who forgets his password must supply and prove ownership of the computer 14, typically over the phone or internet. In this situation, the backdoor access of Fig. 3A will work with any similar computer of the same model including an improper or stolen unit. Since an attacker may already own another computer 14, he could foil the manufacturing service center into believing that he is an authorized user and thus get access to the stolen unit. Therefore, it is also desired that some optional method be added to this back door access scheme to prevent just having proof of ownership of a computer 14 from being able to unlock an improper or stolen computer 14.

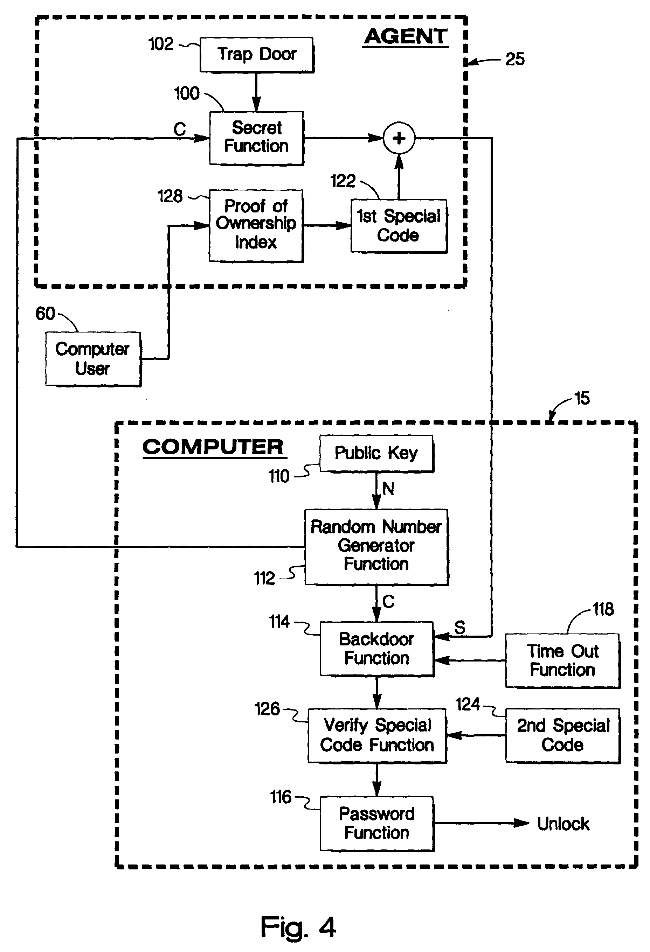

Fig. 4 is an exemplary illustration of a first alternative embodiment of the invention which incorporates a special code 124 in the computer 15 that is unique to each computer 15. Such a special code 124 might be a serial number or a random number. A querying operation is used by the agent 25 to get an index 128 from the computer user 60 to verify proof of ownership, such as a user's name, company, a personal identification number, social security number, or telephone number, to name a few. This index 128 is then used to retrieve a special code 122 for this authorized user from a database of authorized users within the agent. The special code 122 is then included with the response of the agent, for example by encryption, and sent to the computer. The computer then recovers and compares this special code 122 with an expected special code 124 previously stored on the computer in verify special code function 126 before allowing the password function 116 to unlock. If this index 128 is tied to the proof of ownership, such as a serial number, reported by the an authorized user of the computer, only the authorized computer 15 of the computer user 60 will be able to be unlocked. Any other computer 15 would not see the expected response to the challenge and would refuse to unlock.

Because of the need to use the index 128 to retrieve the special code 122 from a database, this scheme works best when the agent 25 is a remote computer. If the agent 25 is to be a small electronic device, it is preferable to not have a large database present on the agent 25 to save money. In this case, it may be desirable to just have the serial number of computer 15 embedded in the small electronic device so that only those small electronic devices with the proper serial number can provide backdoor access. Alternatively, to allow any agent to provide the backdoor access another alternative is to have the special code be a form of a "hint" which only an authorized user would know.

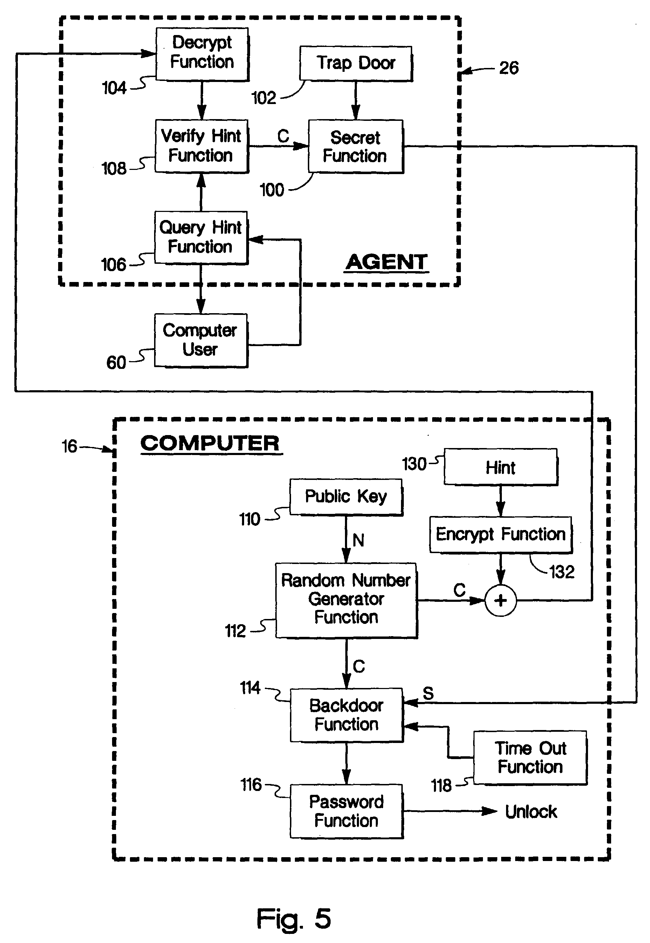

Fig. 5 is an illustration of a second alternative embodiment in which the agent 26 receives a specially encrypted hint that has been previously stored on a computer 16 by the authorized computer user 60 or another authorized person. This hint 130 is a special code that a user is unlikely to forget, such as a maiden name, a social security number, personal identification number, relative's phone number, and child's middle name, to name a few. Alternatively, the hint 130 can be used by a corporate security staff to store a special administration password known only to super authorized users. In this embodiment of Fig. 5, the hint 130 in the computer 16 is encrypted by an encrypt function 132 and included with the random number passed by the computer 16 to the agent 26. The agent 26 then decrypts the encrypted hint using the decrypt function 104. The agent 26 also performs a query hint function 106 in which the agent 26 asks the computer user 60 to supply a copy of the hint 130. The decrypted-encrypted hint is then verified with the computer user supplied hint in a verify hint function 108. If the hint 130 is verified, then the verify hint function 108 passes the random number *C* to the secret function for processing as performed and explained in Fig. 3.

In summary, the invention provides a backdoor access scheme wherein the secret to unlocking the password function of a computer does not reside on the computer. The computer only contains a verification function which verifies that the secret has been performed by an authorized agent external to the computer. Using this technique allows for increased security by preventing access to the computer to unauthorized users while providing a method to gain access to the computer for authorized users even if the password is not known. This technique not only allows for small code size and ease of implementation but also the ability to have the computer manufactured anywhere without compromising the secrets of how to access the computer even if the full schematics or source code of the computer are disclosed.

## Claims

1. A computer (14), comprising:

   a password function (116) used to prevent unauthorized access to the computer (14) capable of being unlocked;
   a random number generating function (112) capable of creating a random number; and
   a backdoor function (114), in cooperation with an agent (24) external to the computer (14), capable of verifying that a secret function (100) has been performed on said random number by the agent (24) thereby allowing unlocking of the password function (116) which grants access to the computer.

2. The computer (14) of claim 1 wherein said backdoor function (114) is the only method of unlocking said password function (116).

3. The computer (14) of claim 1, further comprising:

   a timeout function (118) which provides a fixed time interval only during which the backdoor function (114) is capable of unlocking the password function (116).

4. The computer (14) of claim 1, further comprising:

   a public key (110), N, stored in the computer (14), said public key (110) formed by the product of a first prime number and a second prime number;
   means (112) for generating said random number, modulo N;
   means (152) for communicating said random number to said agent (24) wherein said agent (24) performs said secret function (100) on said random number thereby creating a response;
   means (150) for receiving said response from said agent (24); and
   means (114) for performing a verification operation on said response to validate that that the secret function (100) has been performed on said first random number before unlocking the password function (116).

5. An agent (24) for unlocking a computer (14) having a password, the agent (24) comprising:

   a receiver (158) for accepting a random number from the computer (14);
   a secret function (100) operating on said random number thereby creating a response; and a transmitter (160) for sending said response to the computer (14) wherein said response is capable of unlocking the computer (14).

**6.** The agent (24) of claim 5, wherein said means for performing said secret function (100) on said random number comprises the use of a first prime number and a second prime number to find a square root modulo N of said random number; and wherein said response includes said square root modulo N.

**7.** An authorization system, comprising:

an agent (24), having,

means (158) for receiving a random number;
means (100) for performing a secret function on said random number thereby creating a response; and
means (160) for transmitting said response; and

a computer (14) having a password function (116) capable of being unlocked by a backdoor password function (114), said password function (116) prevents unauthorized user access, the computer (14) further having,

means (112) of creating said random number;
means (152) for transmitting said random number to said agent (24);
means (150) for receiving said response from said agent (24); and
means for unlocking said password function (116) by the backdoor password function (114) if said response confirms that the secret operation was performed on said random number.

**8.** The authorization system of claim 7, wherein said computer (14) further comprises:

a timeout function (118) which provides a time interval beginning from an instant when said random number is sent to said agent (24), and only during said time interval said means for unlocking said password function (116) is operable.

**9.** The authorization system of claim 8, wherein said agent (24) is capable of performing said means (158) for receiving, said means (100) for performing a secret operation, and said means (160) for transmitting said response within said time interval.

**10.** The authorization system of claim 7 wherein the password function (116) of said computer (14) only is capable of being unlocked by said backdoor password function (114).

**Fig. 1**

**COMPUTER USER**

Secret Code — 70

60

**AGENT**

User Private Key — 72

74 — Signing Function

78 — Encryption Function

76 — Time Stamp Function

80 — Computer Public Key

22

**COMPUTER**

12

82 — Computer Private Key

84 — Decryption Function

86 — User Public Key

88 — Backdoor Verify Function

92 — Time Verify Function

70 — Secret Code

90 — Password Function → Unlock

Fig. 2

24 →

**AGENT**

102 — Trap Door

100 — Secret Function

C

14 →

**COMPUTER**

110 — Public Key

N

112 — Random Number Generator Function

C

114 — Backdoor Verify Function

S

118 — Time Out Function

116 — Password Function → Unlock

Fig. 3A

Fig. 3B

Fig. 4

Fig. 5